# EUROPÄISCHE PATENTSCHRIFT

(11) **EP 2 155 522 B1**
(45) Veröffentlichungstag und Bekanntmachung des Hinweises auf die Patenterteilung: **11.05.2011**
(21) Anmeldenummer: 08757258.2
(22) Anmeldetag: 10.06.2008
(51) Int. Cl.: B60R 21/34, B60R 21/233

(54) **SICHERHEITSFAHRZEUG**
SAFETY VEHICLE
VÉHICULE DE SÉCURITÉ

(30) Priorität: 14.06.2007 CH 951072007
(43) Veröffentlichungstag der Anmeldung: 24.02.2010
(73) Patentinhaber: Global Safety Textiles GmbH, 79689 Maulburg (DE)
(72) Erfinder: HORLACHER, Max, 4313 Möhlin (CH)
(74) Vertreter: Wiese Konnerth Fischer Patentanwälte Partnerschaft
(86) Internationale Anmeldenummer: PCT/CH2008/000265
(87) Internationale Veröffentlichungsnummer: WO 2008/151459

(56) Entgegenhaltungen:
- EP-A1- 1 350 692
- DE-A1- 10 233 593
- DE-A1-102005 012 719
- JP-A- 2000 108 824

## Beschreibung

Die Erfindung betrifft ein Sicherheitsfahrzeug gemäss dem Oberbegriff des unabhängigen Anspruchs 1. JP 2000 108 824 beschriebt ein solches Fahrzeugs.

Zum Schutz von Fahrzeuginsassen ist heute jedes Automobil mit einem oder mehreren Airbags im Fahrzeuginneren ausgestattet. Um Fussgänger im Falle eines Zusammenstosses mit dem Fahrzeug zu schützen, ist es auch schon bekannt, das Fahrzeug mit einem Aussen-Airbag zu versehen. Die bekannten Aussen-Airbags sind bieten aber nicht nur ungenügenden Schutz, sondern bergen noch ein zusätzliches Verletzungsrisiko insofern, als sie die mit dem Fahrzeug kollidierende Person weg-und speziell in die Höhe schleudern und die Person beim Zurückfallen auf die Strasse unter Umständen noch schwerer verletzt werden kann als durch den Zusammenstoss mit dem Fahrzeug.

Ausgehend von diesem Stand der Technik soll durch die vorliegende Erfindung ein Sicherheitsfahrzeug geschaffen werden, welches bei einem Zusammenprall mit Fussgängern die Verletzungsgefahr für letztere möglichst reduziert.

Die Lösung dieser der Erfindung zugrundeliegenden Aufgabe ergibt sich aus den im kennzeichnenden Teil des unabhängigen Anspruchs 1 beschriebenen Merkmalen. Besonders vorteilhafte Ausgestaltungen und Weiterbildungen sind Gegenstand der abhängigen Ansprüche.

Die besonderen Vorteile der Erfindung nach Anspruch 1 und der Weiterbildungen der Erfindung gemäß den Unteransprüchen werden in den Absätzen [0010] bis [0015] ausführlich erläutert. Hierzu gehören die vorteilhafte Ausbildung des erfindungsgemäßen Fahrzeugs als Schienenfahrzeug, insbesondere als Straßenbahn, welche in diesem Zusammenhang ebenfalls als Automobile gelten.

Im folgenden wird die Erfindung anhand der Zeichnung näher erläutert Es zeigen:
- Fig. 1: eine Gesamtansicht eines Ausfuhrungsbeispiels des erfindungsgemässen Sicherheitsährzeugs,
- Fig. 2: die vordere Stossstangenpartie des Fahrzeugs mit eingelegtem Airbag,

- Fig. 3: die Frontpartie des Fahrzeugs mit unter der Windschutzscheibe eingeleg- tem Airbag,
- Fig. 4: das Fahrzeug mit zwei Aussen-Airbags im aktivierten (explodierten) Zu- stand,
- Fig. 5: eine spezielle Ausgestaltung des Stossstangen-Airbags,
- Fig. 6: ein Modell einer weiteren Ausgestaltung des Stossstangen-Airbags und
- Fig. 7: ein Prinzipschema der Aktivierungsanordnung für die Airbags.

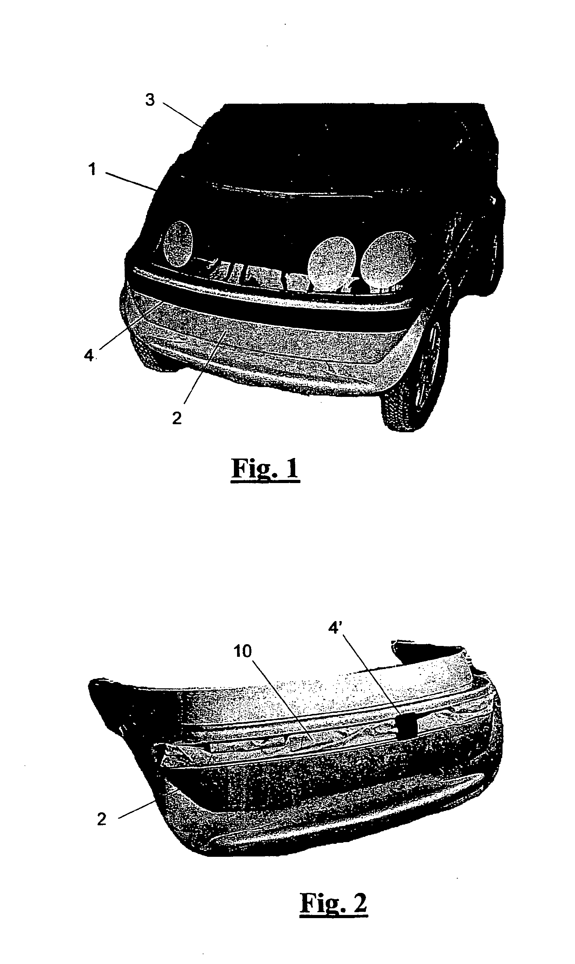

Das in Fig. 1 dargestellte Sicherheitsfahrzeug ist beispielsweise ein Kleinwagen mit Kunststoffkarosserie und Elektroantrieb. Zu erkennen sind in der Figur 1 namentlich eine als ganzes mit 1 bezeichnete Frontpartie, eine grosszügig diniensionierte vordere Stossstange 2 und eine Windschutzscheibe 3.

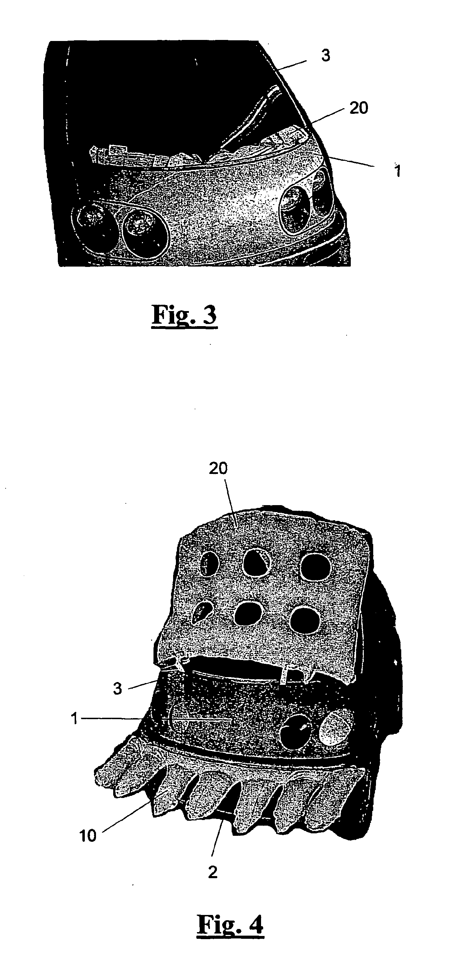

Das Fahrzeug ist mit zwei Aussen-Airbags ausgestattet. Ein erster Airbag 10 (Fig 2) befindet sich in einem Hohlraum der vorderen Stossstange 2 hinter einer Abdeckung 4. Ein zweiter Airbag 20 (Fig. 3) ist hinter der Frontpartie 1 unterhalb der Windschutzscheibe 3 angeordnet.

Die Fig. 2 zeigt die vordere Stossstange 2 mit abgenommener Abdeckung 4, wobei ein kurzes Stück 4' der Abdeckung zur Verdeutlichung der Verhältnisse eingezeichnet ist Aus der Fig. 2 ist deutlich erkennbar, wie der erste Airbag 10 in zusammengefaltetern Zustand in der Stossstange angeordnet ist.

Die Fig. 3 verdeutlicht, wo der zweite Airbag 20 angeordnet ist. In der Praxis befindet sich der zweite Airbag in zusammengefaltetem Zustand knapp unterhalb der Windschutzscheibe 3 hinter der Frontpartie 1.

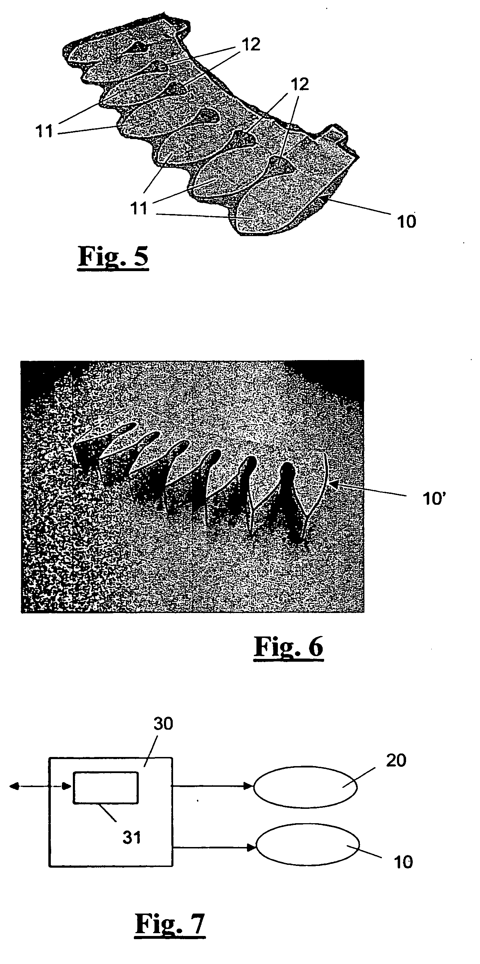

Die beiden Airbags 10 und 20 sind je mit einem herkömmlichen Explosions-Treibsatz zu ihrer Aktivierung ausgestattet und werden von einem Auslösemechnismus 30 gesteuert. Dieser weist geeignete Sensoren 31 auf, die bei einer Kollision mit einer Person den Auslösemechanismus triggern und die Aktivierung (Aufblähung) der beiden Airbags veranlassen (Fig. 7). Gemäss einem besonderen Aspekt der Erfindung sind die Sensoren 31 als Personen-Sensoren ausgebildet, welche den bevorstehenden bzw. eingetretenen Zusammenstoss mit einer Person erkennen können. Dadurch wird verhindert, dass die Airbags z.B. bei Kollision mit kleineren Gegenständen unbeabsichtigt gefeuert werden.

Die Fig. 4 zeigt die Airbags in aktiviertem (explodiertem, aufgeblähter) Zustand. Wie man erkennt, steht der erste Airbag 10 etwa horizontal von der vorderen Stossstange 2 ab, während sich der zweite Airbag 20 wie eine Luftmatratze vor bzw. über der Windschutzscheibe 3 liegt. Die kollidierende Person wird dadurch optimal vor Verletzungen geschützt

Besondere Bedeutung kommt nach einem weiteren wichtigen Aspekt der Erfindung der Formgebung der Airbags, speziell des ersten, in der Stossstange angeordneten Airbags 10 zu. Wie aus Fig. 4 erhellt, weist der erste Airbag 10 in explodiertem Zustand eine Reihe von kammartig angeordneten, im wesentlichen etwa keilförmigen Zinken 11 auf, welche sich von der Stossstange 3 nach vorne erstrecken. Im Falle einer Kollision mit einer Person umschliessen die Zinken 11 die Beine der Person und verhindern so, dass die Person weggeschleudert wird.

Dieser Schutzeffekt wird durch die gemäss Fig. 5 abgewandelte Formgebung des Airbags 10 noch verstärkt. Die Fig. 5 zeigt den Airbag im entfalteten, aber nicht aktivierten Zustand. Wie man erkennt, verdicken sich die Zinken 11 bei dieser Ausführungsform in Richtung auf die Stossstange zu, werden aber in Stossstangennähe wieder etwas schlanker, so dass zwischen den Zinken 11 Aussparungen 12 gebildet werden. Diese Aussparungen verbessern die Festhaltewirkung für kollidierende Personen.

Die Fig. 6 schliesslich zeigt ein Modell 10' des Stossstangen-Airbags ähnlich dem in Fig. 5 dargestellten. Im Unterschied zu diesem ist der Airbag 10' aber nicht aus zwei flachen Zuschnitten gefertigt, sondern aus drei oder mehreren Zuschnitten, was höhere Freiheit in der räumlichen Formgebung erlaubt. Dadurch kann die Rückhaltewirkung der Zinken noch weiter optimiert werden.

Die vorstehend beispielsweise im Zusammenhang mit einem Automobil erläuterte Sicherheitsausrüstung ist sinngemäss auch auf andere Fahrzeuge, beispielsweise etwa Strassenbahnen oder generell Schienenfahrzeuge übertragbar bzw. dort einsetzbar.

## Patentansprüche

1. Sicherheitsfahrzeug, insbesondere ein Automobil, insbesondere ein Kleinwagen, mit mindestens einem Außen-Airbag, wobei ein erster Airbag (10) im Bereich der vorderen Stoßstange (2) des Fahrzeugs angeordnet ist und im explodierten Zustand eine kammartig gezinkte Gestalt mit von der Stoßstange abstehenden Zinken (11) aufweist, **dadurch gekennzeichnet, dass** zwischen den Zinken (11) des ersten Airbags (10) in Stoßstangennähe Aussparungen (12) gebildet sind, so dass die Abstände der Zinken (11) in Stoßstangennähe größer sind als weiter von der Stoßstange entfernt.

2. Fahrzeug nach einem der vorhergehenden Ansprüche, **dadurch gekennzeichnet, dass** unterhalb der Windschutzscheibe (3) des Fahrzeugs ein zweiter Airbag (20) angeordnet ist, welcher sich bei Aktivierung über die Windschutzscheibe legt.

3. Fahrzeug nach einem der vorhergehenden Ansprüche, **dadurch gekennzeichnet, dass** ein Schienenfahrzeug ist.

4. Fahrzeug nach einem der vorhergehenden Ansprüche, **dadurch gekennzeichnet, dass** eine Straßenbahn ist.

## Claims

1. A safety-engineered vehicle, in particular an automotive vehicle, in particular a compact car comprising at least one external airbag, wherein a first airbag (10) is arranged in the region of the front bumper (2) of the vehicle and featuring when deployed a forked comb-like configuration with forks (11) fronting the bumper, **characterized in that** recesses (12) are configured between the forks (11) of the first airbag (10) in the vicinity of the bumper so that the spacings of the forks (11) in the vicinity of the bumper are larger than further away from the bumper.

2. The vehicle as set forth in any of the preceding claims, **characterized in that** arranged below the windscreen (3) of the vehicle is a second airbag (20) which when activated covers the windscreen.

3. The vehicle as set forth in any of the preceding claims, **characterized in that** it is a rail vehicle.

4. The vehicle as set forth in claim 4, **characterized in that** it is a streetcar.

## Revendications

1. Véhicule de sécurité, en particulier une voiture, en particulier une voiturette automobile, présentant au moins un airbag extérieur, où un premier airbag (10) est disposé dans la zone du pare-chocs avant (2) du véhicule et présente, à l'état déployé, une forme dentée de type peigne avec des dents (11) s'éloignant du pare-chocs, **caractérisé en ce que** des évidements (12) sont formés entre les dents (11) du premier airbag (10) à proximité du pare-chocs, de manière telle que les distances entre les dents (11) à proximité du pare-chocs sont supérieures à celles plus éloignées du pare-chocs.

2. Véhicule selon l'une quelconque des revendications précédentes, **caractérisé en ce qu'**un deuxième airbag (20), qui se place, en cas d'activation, sur le pare-brise, est disposé sous le pare-brise (3) du véhicule.

3. Véhicule selon l'une quelconque des revendications précédentes, **caractérisé en ce qu'**il s'agit d'un véhicule sur rails.

4. Véhicule selon l'une quelconque des revendications précédentes, **caractérisé en ce qu'**il s'agit d'un tram.
